# FASCICULE DE BREVET EUROPEEN

(11) **EP 2 576 894 B1**
(45) Date de publication et mention de la délivrance du brevet: **25.03.2015**
(21) Numéro de dépôt: 11719578.4
(22) Date de dépôt: 17.05.2011
(51) Int. Cl.: D07B 1/06, D07B 1/16, B60C 1/00

(54) **RENFORT FILAIRE COMPOSITE POUR PNEUMATIQUE, ENROBE D'UN CAOUTCHOUC A PROPRIETE DE BARRIERE A L'EAU AMELIOREE**
VERBUNDDRAHTVERSTÄRKUNG FÜR EINEN REIFEN MIT GUMMIBESCHICHTUNG MIT VERBESSERTEN WASSERSPERREIGENSCHAFTEN
COMPOSITE WIRE REINFORCEMENT FOR A TIRE, COATED WITH RUBBER HAVING ENHANCED WATER-BARRIER PROPERTIES

(30) Priorité: 27.05.2010 FR 1054094
(43) Date de publication de la demande: 10.04.2013
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: CHANG, Yoonhee, Ota Gunma 373-8668 (JP); PAGANO, Salvatore, Tokyo 102-8176 (JP)
(74) Mandataire: Ribière, Joel
(86) Numéro de dépôt international: PCT/EP2011/057921
(87) Numéro de publication internationale: WO 2011/147710

(56) Documents cités:
- EP-A2- 1 258 338
- WO-A1-03/066353
- GB-A- 1 069 461
- JP-A- 11 200 267

## Description

### 1. DOMAINE DE L'INVENTION

Le domaine de la présente invention est celui des éléments de renforcement ou « renforts », métalliques ou textiles, enrobés ou gainés de caoutchouc, utilisables notamment pour renforcer des articles finis ou produits semi-finis en caoutchouc tels que par exemple des pneumatiques pour véhicules automobiles.

Elle est plus également relative aux compositions caoutchouteuses utilisées dans les pneumatiques, en particulier dans le sommet ("*crown*") des pneumatiques à armature de carcasse radiale, ainsi qu'à la protection des armatures de renforcement du sommet encore appelées ceintures ("*belts*") de ces pneumatiques.

### 2. ETAT DE LA TECHNIQUE

Un pneumatique à armature de carcasse radiale, de manière connue, comporte une bande de roulement, deux bourrelets inextensibles, deux flancs reliant les bourrelets à la bande de roulement et une ceinture disposée circonférentiellement entre l'armature de carcasse et la bande de roulement, cette ceinture étant constituée de diverses nappes (ou "couches") de caoutchouc renforcées par des éléments de renforcement ou renforts tels que des câblés ou des monofilaments, du type métalliques ou textiles.

Plus précisément, une ceinture de pneumatique est généralement constituée d'au moins deux nappes de ceinture superposées, dites parfois nappes "de travail" ou nappes "croisées", dont les renforts, textiles ou métalliques sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45° selon le type de pneu considéré. Chacune de ces deux nappes croisées est constituée d'une matrice de caoutchouc ou "gomme de calandrage" enrobant les renforts. Dans la ceinture, les nappes croisées peuvent être complétées par diverses autres nappes ou couches de caoutchouc auxiliaires, de largeurs variables selon les cas, comportant ou non des renforts ; on citera à titre d'exemple de simples coussins de gomme, des nappes dites "de protection" chargées de protéger le reste de la ceinture des agressions externes, des perforations, ou encore des nappes dites "de frettage" comportant des renforts orientés sensiblement selon la direction circonférentielle (nappes dites "à zéro degré"), qu'elles soient radialement externes ou internes par rapport aux nappes croisées.

Pour le renforcement des ceintures ci-dessus, en particulier de leurs nappes croisées, nappes de protection ou nappes de frettage, on utilise généralement des renforts sous forme de câbles d'acier *("steel cords")* ou des câblés textiles *("textile cords")* constitués de fils fins assemblés entre eux par câblage ou retordage.

Pour remplir efficacement leur fonction de renforcement des ceintures de pneumatiques radiaux, soumises comme on le sait à des contraintes très importantes lors du roulage des pneumatiques, ces câbles d'acier ou textiles doivent satisfaire à un très grand nombre de critères techniques, parfois contradictoires, tels qu'une haute endurance en compression, une résistance élevée à la traction, à l'usure et à la corrosion, une forte adhésion au caoutchouc environnant, et être capables de maintenir ces performances à un niveau très élevé aussi longtemps que possible.

Or, il est connu que des agents corrosifs tels que l'eau, susceptibles de pénétrer dans les pneumatiques notamment à la suite de coupures ou autres agressions de leur sommet, peuvent cheminer jusqu'à la ceinture. La présence d'humidité dans la ceinture, qui plus est sous des conditions de températures relativement élevées, risque de provoquer de la corrosion et d'accélérer les processus de fatigue (phénomènes dits de "fatigue-corrosion"), tout en pénalisant l'adhésion entre les câbles d'acier et la composition de caoutchouc avoisinante, jouant finalement un rôle majeur dans la pérennité des performances des pneumatiques. Il est de même pour les câblés textiles pour lesquels la présence d'humidité risque de pénaliser à terme l'adhésion au caoutchouc, et finalement l'endurance des renforts.

Un renfort filaire composite enrobé de caoutchouc, utilisable pour le renforcement d'un article fini en caoutchouc tel qu'un pneumatique, comportant plusieurs fils de renforcement métalliques, et une composition de caoutchouc dite gomme d'enrobage enrobant chaque fil, cette gomme d'enrobage comportant au moins un élastomère diénique, une charge renforçante, entre 10 et 150 pce d'une charge et un système de réticulation est connu de WO03/066353 A1.

### 3. BREVE DESCRIPTION DE L'INVENTION

Or, les Demanderesses ont découvert lors de leurs recherches une composition de caoutchouc spécifique qui possède d'excellentes propriétés de barrière à eau et qui est ainsi susceptible de conférer une protection améliorée aux renforts, en particulier à la ceinture des pneumatiques.

En conséquence, un premier objet de l'invention concerne un renfort filaire composite enrobé de caoutchouc, utilisable notamment pour le renforcement d'un article fini en caoutchouc tel qu'un pneumatique, comportant un ou plusieurs fil(s) de renforcement, textile(s) ou métallique(s), et une composition de caoutchouc dite gomme d'enrobage enrobant chaque fil, ce renfort filaire composite étant caractérisé en ce que la gomme d'enrobage comporte au moins un élastomère diénique, une charge renforçante, entre 10 et 150 pce d'une charge lamellaire et un système de réticulation.

La présente invention concerne également l'utilisation du renfort filaire de l'invention comme élément de renforcement d'articles finis ou produits semi-finis en caoutchouc, particulièrement de pneumatiques, notamment des pneumatiques destinés à équiper des véhicules à moteur de type tourisme, SUV (*"Sport Utility Vehicles*"), deux roues (notamment vélos, motos), avions, comme des véhicules industriels choisis parmi camionnettes, "Poids-lourd" c'est-à-dire métro, bus, engins de transport routier (camions, tracteurs, remorques), véhicules hors-la-route tels qu'engins agricoles ou de génie civil, autres véhicules de transport ou de manutention.

L'invention concerne également en soi tout article fini ou produit semi-fini en caoutchouc, en particulier pneumatique, à l'état cru comme à l'état réticulé, qui comporte un renfort filaire selon l'invention.

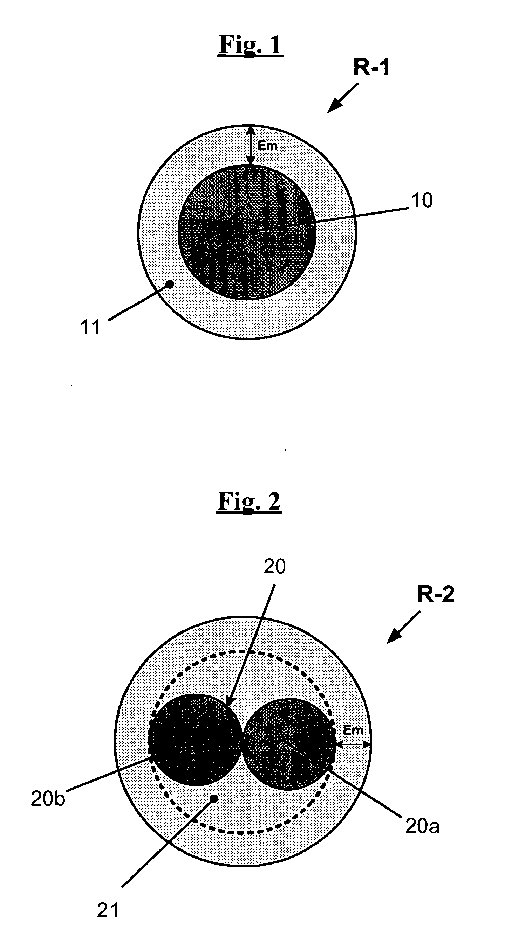

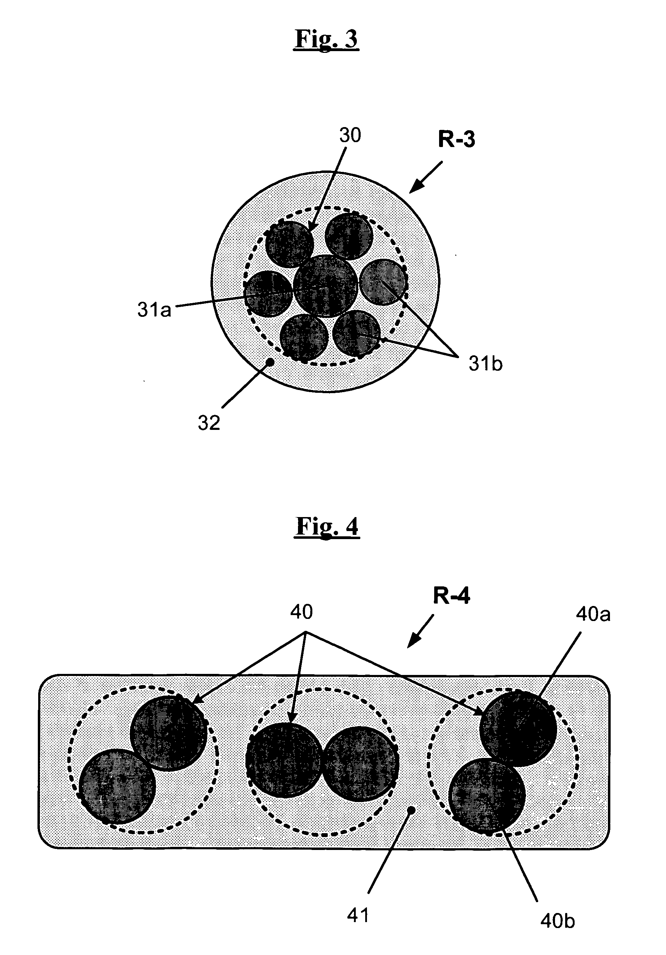

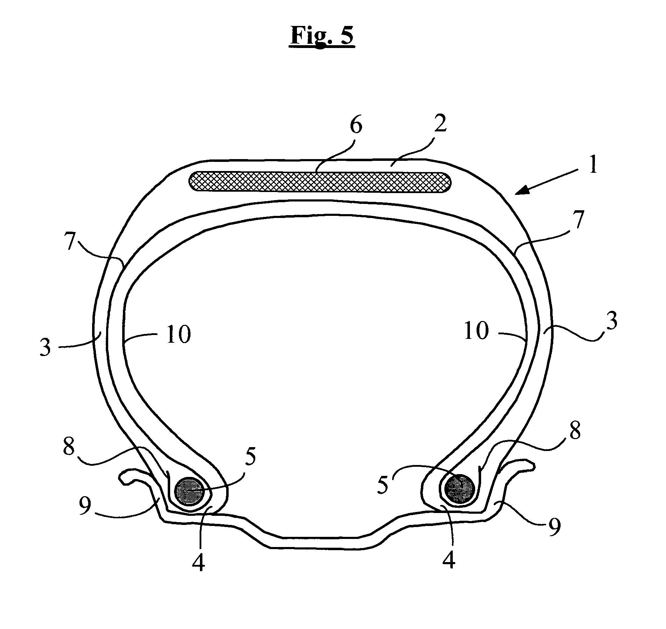

L'invention ainsi que ses avantages seront aisément compris à la lumière de la description et des exemples de réalisation qui suivent, ainsi que des figures relatives à ces exemples qui schématisent :
- en coupe transversale, un exemple d'un renfort filaire selon l'invention (Fig. 1) ;
- en coupe transversale, un autre exemple d'un renfort filaire conforme à l'invention (Fig. 2) ;
- en coupe transversale, un autre exemple d'un renfort filaire conforme à l'invention (Fig. 3) ;
- en coupe transversale, un autre exemple d'un renfort filaire conforme à l'invention, sous forme d'une bandelette de 3 câbles noyés dans leur gomme d'enrobage (Fig. 4) ;
- en coupe radiale, un bandage pneumatique à armature de carcasse radiale conforme à l'invention, incorporant dans sa ceinture des renforts filaires selon l'invention (Fig. 5).

### 4. DESCRIPTION DETAILLEE DE L'INVENTION

Dans la présente description, sauf indication expresse différente, tous les pourcentages (%) indiqués sont des % en masse.

L'abréviation "pce" (usuellement "*phr*" en anglais) signifie parties en poids pour cent parties d'élastomère ou caoutchouc (du total des élastomères si plusieurs élastomères sont présents).

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le renfort composite de l'invention dit aussi "renfort filaire" (i.e., élément de renforcement comportant un ou plusieurs fils) est donc un renfort enrobé de caoutchouc, à l'état cru ou cuit (réticulé). Il a pour caractéristique essentielle de comporter au moins un (c'est-à-dire un ou plusieurs) fil(s) de renforcement, textile(s) ou métallique(s), ainsi qu'une composition de caoutchouc spécifique dite gomme d'enrobage, qui recouvre, enrobe individuellement ledit fil ou collectivement plusieurs fils. La structure de ce renfort de l'invention est décrite en détail ci-après.

### 4.1 - Fil de renforcement

Dans la présente demande, on entend de manière générale par fil de renforcement *("reinforcing thread")* tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé. Lorsqu'il est de forme circulaire, son diamètre est de préférence inférieur à 5 mm, plus préférentiellement compris dans un domaine de 0,1 à 2 mm.

Ce fil de renforcement peut prendre toute forme connue, il peut s'agir par exemple d'un monofilament élémentaire de diamètre important (par exemple et de préférence égal ou supérieur à 50 µm), d'un ruban élémentaire, d'un film, d'une fibre multifilamentaire (constituée d'une pluralité de filaments élémentaires de faible diamètre, typiquement inférieur à 30 µm), d'un retors textile formé de plusieurs fibres retordues ensemble, d'un câble textile ou métallique formé de plusieurs fibres ou monofilaments câblés ou retordus ensemble, ou encore d'un assemblage, une rangée de fils comportant plusieurs de ces monofilaments, fibres, retors ou câbles regroupés ensemble.

Selon un mode de réalisation préférentiel, le renfort filaire de l'invention peut donc se présenter sous la forme d'un seul fil de renforcement, gainé dans sa gomme d'enrobage, pour constituer un fil composite unitaire gainé par sa composition de caoutchouc spécifique.

Selon un autre mode de réalisation préférentiel, le renfort filaire de l'invention peut aussi se présenter sous la forme de plusieurs fils de renforcement (monofilaments, rubans, films, fibres, retors ou câbles) regroupés ensemble, par exemple alignés selon une direction principale, rectiligne ou pas, ces fils de renforcement étant alors collectivement gainés dans leur gomme d'enrobage, pour constituer par exemple une bande, bandelette, un tissu composite en caoutchouc de diverses formes telle que ceux usuellement rencontrées dans la structure des pneumatiques. A titre d'exemples préférentiels de renforts filaires conformes à l'invention, on citera particulièrement les tissus constituant les nappes d'armature de carcasse, les nappes sommet de protection, les nappes sommet de frettage ou les nappes sommet de travail présentes dans les ceintures des pneumatiques, la gomme d'enrobage constituant la gomme de calandrage de ces tissus lorsque ces derniers sont fabriqués par calandrage.

Selon un mode de réalisation préférentiel, le fil de renforcement est un fil de renforcement métallique, notamment en acier au carbone tel qu'utilisé habituellement dans les câbles type *"steel cords"* pour pneumatiques ; mais il est bien entendu possible d'utiliser d'autres aciers, par exemple des aciers inoxydables. Lorsqu'un acier au carbone est utilisé, sa teneur en carbone est de préférence comprise entre 0,4% et 1,2%, notamment entre 0,5% et 1,1%. L'invention s'applique en particulier à tout acier du type *steel cord* à résistance standard (dit "NT" pour *"Normal Tensile "),* à haute résistance (dit "HT" pour *" High Tensile* "), à très haute résistance (dit "SHT" pour " *Super High Tensile* ") comme à ultra-haute résistance (dit "UHT" pour *"Ultra High Tensile* "). L'acier peut être revêtu d'une couche adhésive telle que du laiton ou du zinc.

Selon un autre mode de réalisation préférentiel, le fil de renforcement est un fil textile, constitué d'une matière polymérique synthétique ou naturelle, voire d'une matière minérale. A titre d'exemples, on peut citer notamment les fils de renforcement en alcool polyvinylique (PVA), polyamide aliphatique (e.g. polyamides 4-6, 6, 6-6, 11 ou 12), polyamide aromatique (ou "aramide"), polyamide-imide, polyimide, polyester (e.g. PET, PEN), polyester aromatique, polyéthylène, polypropylène, polycétone, cellulose, rayonne, viscose, polyphénylène benzobisoxazole (PBO), verre, carbone ou encore céramique.

### 4.2 - Gomme d'enrobage

La gomme d'enrobage spécifique utilisée est une composition de caoutchouc comportant au moins un élastomère diénique, une charge renforçante, entre 10 et 150 pce d'une charge lamellaire et un système de réticulation.

### A) Elastomère diénique

Par élastomère (ou caoutchouc, les deux termes étant synonymes) du type "diénique", on rappelle que doit être entendu un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". Les caoutchoucs butyl, comme par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères (tels que SBR, BR, NR ou IR) du type époxydés.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg") de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Selon un mode de réalisation particulièrement préférentiel de l'invention, l'élastomère diénique est choisi dans le groupe constitué par le caoutchouc naturel, les polyisoprènes de synthèse, les polybutadiènes ayant un taux de liaisons cis-1,4 supérieur à 90%, les copolymères de butadiène-styrène et les mélanges de ces élastomères.

Plus préférentiellement, la composition de caoutchouc comporte 50 à 100 pce d'un copolymère à base de styrène et de butadiène, c'est-à-dire d'un copolymère d'au moins un monomère styrène et d'au moins un monomère butadiène ; en d'autres termes, ledit copolymère à base de styrène et de butadiène comporte par définition au moins des unités issues de styrène et des unités issues de butadiène, ledit copolymère pouvant être utilisé avec au plus 50 pce d'un autre élastomère diénique, en particulier d'un polybutadiène ou plus préférentiellement de caoutchouc naturel ou d'un polyisoprène de synthèse. A titre de monomères butadiène conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène. A titre de monomères styrène conviennent notamment le styrène, les méthylstyrènes, le para-tertiobutylstyrène, les méthoxystyrènes, les chlorostyrènes.

De préférence, ce copolymère à base de styrène et de butadiène est choisi dans le groupe constitué par les copolymères styrène-butadiène (en abrégé SBR), les copolymères styrène-butadiène-isoprène (en abrégé SBIR) et les mélanges de tels copolymères.

Parmi les copolymères SBIR, on peut citer notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%.

Plus préférentiellement, on utilise un copolymère SBR. Parmi les copolymères SBR, on peut citer notamment ceux ayant une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%.

De préférence, la Tg du copolymère à base de styrène et de butadiène est supérieure à -40°C, notamment comprise entre -40°C et 0°C ; plus préférentiellement encore, sa Tg est supérieure à -35°C, notamment comprise entre -35°C et 0°C, en particulier supérieure à -30°C, notamment comprise entre -30°C et 0°C (par exemple dans un domaine de -25°C à -5°C). Selon d'autre modes de réalisation possibles, le domaine de Tg préférentiel peut également englober des valeurs positives (c'est-à-dire supérieures à 0°C), par exemple être compris dans un domaine de -30°C à +30°C (en particulier de -25°C à +25°C).

L'homme du métier sait comment modifier la microstructure d'un copolymère à base de styrène et de butadiène, en particulier d'un SBR, pour augmenter et ajuster sa Tg, notamment en jouant sur les teneurs en styrène, en liaisons -1,2 ou encore en liaisons trans-1,4 de la partie butadiénique. On utilise plus préférentiellement un SBR (solution ou émulsion) ayant une teneur en styrène (% molaire) qui est supérieure à 35%, plus préférentiellement comprise entre 35% et 60%, en particulier dans un domaine de 38% à 50%. Des SBR à relative haute Tg sont bien connus de l'homme du métier, ils ont été notamment utilisés dans des bandes de roulement de pneumatiques pour améliorer certaines de leurs propriétés d'usage.

Selon un autre mode de réalisation préférentiel, la composition de caoutchouc comporte 50 à 100 pce de caoutchouc naturel ou de polyisoprène de synthèse, ledit caoutchouc naturel ou le polyisoprène de synthèse pouvant être utilisé notamment en coupage (mélange) avec au plus 50 pce d'un autre élastomère diénique, en particulier d'un polybutadiène ou plus préférentiellement d'un copolymère à base de styrène et de butadiène tel que décrit supra.

Aux élastomères diéniques des bandes de roulement selon l'invention pourraient être associés, en quantité minoritaire, des élastomères synthétiques autre que diéniques, voire des polymères autres que des élastomères, par exemple des polymères thermoplastiques.

La Tg des élastomères ici décrits est mesurée de manière conventionnelle, bien connue de l'homme du métier, sur un élastomère à l'état sec (i.e., sans huile d'extension) et par DSC (par exemple selon ASTM D3418 - 1999).

### B) Charge renforçante

La composition de l'invention comporte tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge.

Une telle charge renforçante consiste préférentiellement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

De manière préférentielle, le taux de charge renforçante totale (en particulier de la silice ou du noir de carbone ou un mélange de silice et de noir de carbone) est supérieur à 20 pce, en particulier compris entre 20 et 100 pce. Au-delà de 100 pce, il existe un risque d'augmentation de l'hystérèse et donc de la résistance au roulement des pneumatiques. Pour cette raison, le taux de charge renforçante totale est plus préférentiellement compris dans un domaine de 30 à 90 pce.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone des séries 100, 200, 300, 600 ou 700 (grades ASTM), comme par exemple les noirs N115, N134, N234, N326, N330, N339, N347, N375, N550, N683, N772. Les noirs de carbone pourraient être par exemple déjà incorporés à l'élastomère diénique, notamment isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche" ou parfois charge "claire" par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:
(I) Z - A - Sₓ - A - Z , dans laquelle:
   - x est un entier de 2 à 8 (de préférence de 2 à 5) ;
   - les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
   - les symboles Z, identiques ou différents, répondent à l'une des trois formules ci-après: 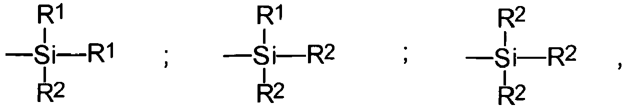 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée. Dans les compositions de caoutchouc de l'invention, lorsqu'elles sont renforcées par une charge inorganique telle que silice, la teneur en agent de couplage est préférentiellement comprise entre 2 et 15 pce, plus préférentiellement entre 3 et 12 pce.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

### C) Charge lamellaire

La gomme d'enrobage a pour autre caractéristique essentielle de comporter entre 10 et 150 pce d'une charge lamellaire.

En dessous du minimum indiqué, l'effet technique visé est insuffisant alors qu'au-delà du maximum préconisé, on s'expose à des problèmes rédhibitoires d'augmentation du module, de fragilisation de la composition, aussi à des difficultés de dispersion de la charge et de processabilité, sans parler d'une pénalisation notable de l'hystérèse. Pour toutes les raisons indiquées ci-dessus, on utilise un taux de charge lamellaire préférentiellement compris entre 20 et 100 pce, plus préférentiellement encore compris dans un domaine de 25 à 80 pce.

D'autre part, pour une performance optimale, exprimé cette fois en volume et non plus en poids, le taux de charge lamellaire est préférentiellement inférieur à 30%, plus préférentiellement inférieur à 25%, en particulier inférieur à 20% (% en volume de composition élastomère ou gomme d'enrobage).

Les charges dites lamellaires (en anglais *"platy fîllers*") sont bien connues de l'homme du métier. Elles ont été notamment utilisées dans des bandages pneumatiques pour réduire la perméabilité des couches étanches aux gaz ("*inner*-*liners*") conventionnelles à base de caoutchouc butyl. Dans ces couches à base de butyl, elles sont généralement utilisées à des taux relativement faibles, n'excédant pas le plus souvent 10 à 25 pce (voir par exemple les documents brevet US 2004/0194863, WO 2006/047509).

Elles se présentent généralement sous forme de plaques, plaquettes, feuilles ou feuillets empilés, paillettes, avec une anisométrie plus ou moins marquée de ces particules. Leur rapport de forme (F = L/E) (ou "aspect ratio") est généralement supérieur à 2, plus souvent supérieur à 3 ou à 5, L représentant la longueur (ou plus grande dimension) médiane et E l'épaisseur médiane de ces charges lamellaires, ces moyennes étant calculées en nombre. Préférentiellement, ce rapport de forme est compris entre 2 et 200, notamment entre 3 et 150, plus préférentiellement encore compris dans un domaine de 5 à 100, en particulier de 5 à 50.

Ces charges lamellaires sont préférentiellement de taille micrométrique, c'est-à-dire qu'elles se présentent sous la forme de microparticules dont la taille ou longueur médiane (L) est supérieure à 1 µm, typiquement comprise entre quelques µm (par exemple 5 ou 10 µm) et quelques centaines de µm (par exemple 500 voire 800 µm). Selon un mode préférentiel, la longueur médiane (L) des particules est comprise entre 5 et 500 µm, plus préférentiellement comprise entre 50 et 250 µm. Selon un autre mode préférentiel, l'épaisseur médiane (E) des particules est quant à elle comprise entre 0,5 et 50 µm, notamment entre 2 et 30 µm.

Préférentiellement, les charges lamellaires utilisées conformément à l'invention sont choisies dans le groupe constitué par les graphites, les phyllosilicates et les mélanges de telles charges. Parmi les phyllosilicates, on citera notamment les argiles, talcs, micas, kaolins, ces phyllosilicates pouvant être modifiés ou non par exemple par un traitement de surface ; à titre d'exemples de tels phyllosilicates modifiés, on peut citer notamment des micas recouverts d'oxyde de titane, des argiles modifiées par des tensioactifs *("organo clays").*

On utilise préférentiellement des charges lamellaires à faible énergie de surface, c'est-à-dire relativement apolaires, telles que celles choisies dans le groupe constitué par les graphites, les talcs, les micas et les mélanges de telles charges, ces dernières pouvant être modifiées ou non, plus préférentiellement encore dans le groupe constitué par les graphites, les talcs et les mélanges de telles charges. Parmi les graphites peuvent être utilisés les graphites naturels comme les graphites synthétiques.

Comme exemples de micas, on peut citer les micas commercialisés par la société CMMP (Mica-MU®, Mica-Soft®, Briomica® par exemple), les vermiculites (notamment la vermiculite Shawatec® commercialisée par CMMP ou la vermiculite Microlite® commercialisée par W.R.Grace), les micas modifiés ou traités (par exemple, la gamme Iriodin® commercialisée par Merck). Comme exemples de graphites, on peut citer les graphites commercialisés par la société Timcal (gamme Timrex®). Comme exemple de talcs, on peut citer les talcs commercialisés par la société Luzenac. Comme exemples de paillettes de verre ("*glass flakes*"), on peut citer les produits "RCF600" commercialisés par la société Nippon Glass Sheet.

L'introduction des charges lamellaires dans la composition élastomère peut être réalisée selon divers procédés connus, par exemple par mélangeage en solution, par mélangeage en masse dans un mélangeur interne, ou encore par mélangeage par extrusion.

Pour l'analyse de la granulométrie et le calcul de la taille médiane des (micro)particules de charge lamellaire, différentes méthodes connues sont applicables, par exemple par diffraction laser (voir par exemple norme ISO-8130-13 ou norme JIS K5600-9-3).

On peut aussi utiliser, de manière simple et préférentielle, une analyse de la granulométrie par un tamisage mécanique ; l'opération consiste à tamiser une quantité définie d'échantillon (par exemple 200 g) sur une table vibrante pendant 30 min avec des diamètres de tamis différents (par exemple, selon une raison de progression, avec des mailles (en µm) de 75, 105, 150, 180, etc.) ; les refus récoltés sur chaque tamis sont pesés sur une balance de précision ; on en déduit le % de refus pour chaque diamètre de maille par rapport au poids total de produit ; la taille médiane (ou diamètre médian) est finalement calculée de manière connue à partir de l'histogramme de la distribution granulométrique.

### D) Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs primaires sont plus préférentiellement choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés.

### E) Additifs divers

La composition de caoutchouc constituant la gomme d'enrobage peut comporter également tout ou partie des additifs usuels habituellement utilisés dans les compositions de caoutchouc pour pneumatiques, comme par exemple des agents de protection tels que anti-ozonants chimiques, anti-oxydants, des agents plastifiants ou des huiles d'extension, que ces derniers soient de nature aromatique ou non-aromatique, notamment des huiles très faiblement ou non aromatiques, par exemple du type naphténiques ou paraffiniques, à haute ou de préférence à basse viscosité, des huiles MES ou TDAE, des résines plastifiantes hydrocarbonées à haute Tg, des résines tackifiantes, des agents facilitant la mise en oeuvre (processabilité) des compositions à l'état cru, des résines renforçantes (tels que résorcinol ou bismaléimide), des accepteurs ou donneurs de méthylène tels que hexaméthylènetétramine ou hexaméthoxyméthylmélamine, des systèmes promoteurs d'adhésion connus du type sels métalliques, par exemple des sels (e.g. acétylacétonates, abiétates, naphténates, talates) de cobalt, de nickel ou de lanthanide tel que néodyme.

En particulier, il s'est avéré que des résines plastifiantes hydrocarbonées à haute Tg, de préférence supérieure à 20°C, plus préférentiellement supérieure à 30°C (selon ASTM D3418 de 1999), sont avantageusement utilisables car elles peuvent permettre d'améliorer encore l'effet technique de "barrière à eau" procuré par la sous-couche élastomère de protection précédemment décrite.

Les résines hydrocarbonées (on rappelle que l'appellation "résine" est réservée par définition à un composé solide à 23°C) sont des polymères bien connus de l'homme du métier, utilisables en particulier comme agents plastifiants ou agents tackifiants dans des matrices polymériques. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, aromatiques, du type aliphatique/aromatique c'est-à-dire à base de monomères aliphatiques et/ou aromatiques, hydrogénées ou non. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, leur masse moléculaire moyenne en nombre (Mn) est comprise entre 400 et 2000 g/mol, notamment entre 500 et 1500 g/mol ; leur indice de polymolécularité (Ip) est préférentiellement inférieur à 3, notamment inférieur à 2 (rappel : Ip = Mw/Mn avec Mw masse moléculaire moyenne en poids). La macrostructure (Mw, Mn et Ip) de la résine hydrocarbonée est déterminée par chromatographie d'exclusion stérique ("SEC"): solvant tétrahydrofurane ; température 35°C ; concentration 1 g/l débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

A titre d'exemples de résines plastifiantes hydrocarbonées ci-dessus, on citera notamment les résines d'homopolymères ou copolymères de cyclopentadiène ou dicyclopentadiène, les résines d'homopolymères ou copolymères terpène (e.g. alphapinène, betapinène, dipentène ou polylimonène), les résines d'homopolymères ou copolymères de coupe C5 ou de coupe C9, par exemple de copolymère coupe C5/styrène ou de copolymère coupe C5/coupe C9.

Le taux de résine hydrocarbonée est préférentiellement compris entre 5 et 60 pce, notamment entre 5 et 50 pce, plus préférentiellement encore compris dans un domaine de 10 à 40 pce.

La gomme d'enrobage peut également contenir des activateurs de couplage lorsque qu'un agent de couplage est utilisé, des agents de recouvrement de la charge inorganique lorsqu'une charge inorganique est utilisée, ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de processabilité à l'état cru ; ces agents sont par exemple des hydroxysilanes ou des silanes hydrolysables tels que des alkyl-alkoxysilanes, des polyols, des polyéthers, des amines, des polyorganosiloxanes hydroxylés ou hydrolysables.

### F) Fabrication de la composition

Les compositions de caoutchouc formant la gomme d'enrobage sont fabriquées dans des mélangeurs appropriés, en utilisant par exemple deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Un procédé utilisable pour la fabrication de telles compositions de caoutchouc comporte par exemple et de préférence les étapes suivantes :
- dans un mélangeur, incorporer à l'élastomère diénique, la charge renforçante et entre 10 et 150 pce de la charge lamellaire, en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite un système de réticulation ;
- malaxer le tout jusqu'à une température maximale inférieure à 120°C ;
- extruder ou calandrer la composition de caoutchouc ainsi obtenue.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de réticulation. Après refroidissement du mélange ainsi obtenu au cours de la première phase non-productive, on incorpore alors le système de réticulation à basse température, généralement dans un mélangeur externe tel qu'un mélangeur à cylindres ; le tout est alors mélangé (phase productive) pendant quelques minutes, par exemple entre 5 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable directement comme gomme d'enrobage (ou calandrage) d'un ou plusieurs) fil(s) de renforcement, textile(s) ou métallique(s), tels que décrits précédemment.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

L'épaisseur minimale (notée Em sur les figures 1 et 2 commentées ci-après) de la gomme d'enrobage entourant le ou les fil(s) de renforcement est typiquement comprise entre 0,1 et 2 mm, notamment dans un domaine de 0,2 à 1,5 mm.

De préférence, la gomme d'enrobage présente, à l'état vulcanisé (i.e., après cuisson), un module sécant en extension E10 qui est inférieur à 30 MPa, plus préférentiellement compris entre 2 et 25 MPa, en particulier compris entre 5 et 20 MPa. Le "module sécant en extension" (noté E10) est le module en traction mesuré en seconde élongation (i.e., après un cycle d'accommodation) à 10% d'allongement (selon ASTM D412-1998 ; éprouvette "C"), ce module étant le module sécant "vrai" c'est-à-dire ramené à la section réelle de l'éprouvette (conditions normales de température et d'hygrométrie selon la norme ASTM D1349-1999).

### 5. EXEMPLES DE REALISATION DE L'INVENTION

### 5.1 - Exemples de renforts filaires conformes à l'invention

La figure 1 annexée représente de manière très schématique (sans respect d'une échelle spécifique), en coupe transversale, un premier exemple d'un renfort filaire composite conforme à l'invention. Ce renfort composite noté R-1 est constitué d'un fil de renforcement (10) constitué d'un filament unitaire ou monofilament de diamètre relativement élevé (par exemple entre 0,10 et 0,50 mm), par exemple en acier au carbone, en polyester, Nylon® ou aramide, qui est recouvert d'une couche (11) de gomme d'enrobage à base de caoutchouc naturel, de noir de carbone à titre de charge renforçante, de graphite à titre de charge lamellaire et d'un système de vulcanisation ; son épaisseur minimale est notée Eₘ sur la figure 1.

La figure 2 schématise en coupe transversale un deuxième exemple d'un renfort filaire composite conforme à l'invention. Ce renfort composite noté R-2 est constitué d'un fil de renforcement (20) constitué par exemple de deux monofilaments (20a, 20b) en acier au carbone câblés ensemble, ou encore de deux fibres textiles multifilamentaires (20a, 20b) retordues ensemble par exemple en polyester, Nylon® ou aramide ; le fil de renforcement (20) est recouvert d'une couche (21) de gomme d'enrobage à base de caoutchouc naturel et d'un copolymère SBR dont la Tg est comprise entre -30°C et +30°C, de noir de carbone et silice à titre de charge renforçante, de talc à titre de charge lamellaire et d'un système de vulcanisation ; son épaisseur minimale est notée Eₘ sur la figure 2.

La figure 3 schématise, toujours en coupe transversale, un autre exemple de renfort filaire selon l'invention. Ce renfort R-3 comporte un fil de renforcement (30) consistant ici en un câble d'acier de construction 1+6, avec un fil central ou fil d'âme (31a) et six filaments (31b) de même diamètre enroulés ensemble en hélice autour du fil central. Ce câble ou fil de renforcement (30) est recouvert d'une couche (32) de gomme d'enrobage à base de caoutchouc naturel, de silice à titre de charge renforçante, de mica à titre de charge lamellaire et d'un système de vulcanisation.

Les exemples de renforts filaires composites conformes à l'invention de ces figures 1 à 3 peuvent être préparés de manière bien connue en soi, par exemple en faisant passer le fil de renforcement à travers une filière de diamètre adapté, dans une tête d'extrusion chauffée à une température appropriée, qui délivre la quantité nécessaire de gomme d'enrobage.

La figure 4 schématise en coupe transversale un autre exemple conforme à l'invention, cette fois sous la forme d'une bandelette de caoutchouc renforcée, dans lequel un groupe de plusieurs fils (ici, trois fils pour simplifier) de renforcement sont collectivement noyés dans une gomme d'enrobage apportée de manière connue par exemple par une opération de calandrage. Ce renfort composite noté R-4 est constitué de trois fils de renforcement (40) constitués chacun de brins textiles multifilamentaires (40a, 40b) retordus ensemble, par exemple en Nylon®, polyester ou aramide, ou encore de câbles métalliques (40) constitués chacun de deux monofilaments en acier au carbone (40a, 40b) ; l'ensemble constitué par les trois fils de renforcement (40) alignés est noyé dans une couche (41) de gomme d'enrobage à base de caoutchouc naturel et d'un copolymère SBR dont la Tg est comprise entre -30°C et +30°C, de noir de carbone à titre de charge renforçante, de graphite à titre de charge lamellaire et d'un système de vulcanisation.

### 5.2 - Utilisation du renfort filaire en pneumatique

Le renfort filaire composite de l'invention précédemment décrit est notamment utilisable pour la fabrication de tout article fini ou produit semi-fini en caoutchouc, en particulier pour le renforcement de bandages pneumatiques de tous types de véhicules, en particulier véhicules tourisme ou véhicules industriels tels que Poids-lourd.

Comme déjà indiqué précédemment, ce renfort filaire de l'invention peut se présenter sous des formes variées, sous une forme unitaire (avec un seul fil de renforcement) ou encore sous la forme d'une nappe, bande, bandelette ou d'un bloc de caoutchouc dans lesquels sont incorporés, par exemple par calandrage, plusieurs fils de renforcement textile(s) et/ou métallique(s). L'adhésion définitive entre le métal ou le textile et la gomme d'enrobage peut être obtenue à l'issue de la cuisson, de préférence sous pression, de l'article fini auquel est destiné le renfort filaire de l'invention.

A titre d'exemple, la figure 5 annexée représente de manière très schématique une coupe radiale d'un pneumatique 1 à armature de carcasse radiale conforme à l'invention, destiné par exemple à un véhicule Poids-lourd ou à un véhicule tourisme dans cette représentation générale.

Ce pneumatique 1 comporte un sommet 2, deux flancs 3, deux bourrelets 4, une armature de carcasse 7 s'étendant d'un bourrelet à l'autre. Le sommet 2, surmonté d'une bande de roulement (non représentée sur cette figure schématique, pour simplification), est de manière connue en soi renforcé par une armature de sommet 6 constituée par exemple d'au moins deux nappes sommet croisées superposées (nappes sommet dites "de travail"), recouvertes par exemple d'au moins une nappe de protection ou une nappe sommet de frettage à zéro degré. L'armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est constituée d'au moins une nappe renforcée par des câbles dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6). Bien entendu, ce pneumatique 1 comporte en outre de manière connue une couche de gomme ou élastomère 10, communément appelée gomme ou couche d'étanchéité, qui définit la face radialement interne du pneumatique et qui est destinée à protéger la nappe de carcasse de la diffusion d'air provenant de l'espace intérieur au pneumatique.

Le pneumatique conforme à l'invention a pour caractéristique essentielle de comporter dans sa structure au moins un renfort filaire composite conforme à l'invention. Ce renfort filaire peut former par exemple tout ou partie de l'armature de carcasse 7, de l'armature 5 (tringle) de la zone bourrelet, ou selon un mode de réalisation particulièrement préférentiel de l'armature de sommet 6, que ce soit comme nappe sommet de frettage, nappe sommet de protection ou encore comme nappe sommet de travail. Selon un mode de réalisation particulièrement préférentiel, le renfort filaire constitue, dans la ceinture du pneumatique de l'invention, une nappe de frettage (comportant en particulier des câbles textiles) ou une nappe de protection (comportant des câbles métalliques ou textiles), disposée circonférentiellement entre la bande de roulement et les deux nappes de travail, dont la gomme d'enrobage, grâce à ses propriétés de barrière à eau, protège efficacement contre la corrosion ou le vieillissement humide les deux nappes sommet de travail (comportant en particulier des câbles métalliques) que cette nappe sommet de frettage ou de protection recouvre radialement.

### 5.3 - Tests de caoutchouterie

Pour les besoins de ces essais, 4 compositions de caoutchouc (notées C-2, C-3 d'une part, C-5 et C-6 d'autre part) ont été préparées conformément à l'invention, dont les formulations sont données dans le tableau 1 ; le taux des différents produits est exprimé en pce (parties en poids pour cent parties d'élastomère, constitué ici soit de NR seul, soit d'un coupage de NR et SBR).

Pour la fabrication de ces compositions, on a procédé de la manière suivante: on a introduit dans un mélangeur interne, dont la température initiale de cuve était d'environ 60°C, successivement la charge renforçante (noir de carbone), la charge lamellaire (comportant des particules de graphite) pour les compositions selon l'invention, l'élastomère diénique, ainsi que les divers autres ingrédients à l'exception du système de vulcanisation ; le mélangeur était ainsi rempli à environ 70% (% en volume). On a conduit alors un travail thermomécanique (phase non-productive) en une étape d'environ 2 à 4 min, jusqu'à atteindre une température maximale de "tombée" de 165°C. On a récupéré le mélange ainsi obtenu, on l'a refroidi puis on a incorporé du soufre et un accélérateur type sulfénamide sur un mélangeur externe (homo-finisseur) à 30°C, en mélangeant le tout (phase productive) pendant quelques minutes. La composition ainsi obtenue a été ensuite calandrée sous la forme de plaques (épaisseur égale à 1 mm) utilisables comme gomme d'enrobage dans les renforts filaires de l'invention.

Ces compositions ont été comparées à deux compositions témoin (notées respectivement ci-après C-1 et C-4) de même formulation et préparées de manière identique, mais dépourvues de charge lamellaire.

Pour caractériser les propriétés de barrière à eau de ces différentes compositions (C-1 à C-6), on a réalisé le test simple qui suit : un "skim" (couche d'épaisseur égale à environ 2 mm) d'une composition de caoutchouc dite réceptrice (ci-après notée C-R), de dimensions 150 mm par 150 mm, a été disposé "en sandwich", dans un moule aux dimensions appropriées, entre deux couches (épaisseur égale à environ 0,7 mm) de composites textile/caoutchouc (conformes ou non à l'invention) consistant en une série (pas de pose d'environ 0,5 mm) de retors textiles en Nylon® (2 brins de 94 tex retordus ensemble) noyés dans une gomme d'enrobage constituée par les compositions "barrière" à tester (C-1 à C-6) du tableau 1.

L'ensemble final ainsi moulé constituait un bloc de caoutchouc sous forme d'un parallélépipède de dimensions 150 mm par 150 mm et d'épaisseur totale égale à 4 mm. La composition C-R utilisée était une composition de caoutchouc connue, conventionnellement utilisée comme gomme de calandrage de nappes sommet de frettage dans une ceinture de pneumatique, à base de caoutchouc naturel (peptisé) et de noir de carbone N326 (55 pce).

Après cuisson (vulcanisation) de plusieurs blocs de caoutchouc ainsi préparés, pendant 30 min à 150°C et sous une pression de 15 bar (piston rectangulaire de 150 x 150 mm), ces derniers ont été démoulés pour être enfin soumis à une série de traitements thermiques et humides, à 55°C et sous une humidité relative de 95%, d'une durée maximale de 2 semaines. Après traitement, des échantillons des compositions réceptrices C-R ont été extraits du centre des blocs de caoutchouc par décorticage, puis leur teneur (% en poids de composition réceptrice) en eau a été déterminée par une titration Karl-Fischer et comparée à la teneur initiale avant traitement (soit environ 0,5%, quelle que soit la composition barrière testée).

Les résultats donnés dans les tableaux 2 et 3 expriment la prise d'eau c'est-à-dire l'augmentation de la teneur en eau observée dans la composition réceptrice C-R, pour les six compositions barrière testées dans lesquelles la composition réceptrice a été moulée. Une prise d'eau de +1,6 % exprimée par exemple pour la composition barrière C-1 après un traitement de 14 jours signifie que la quantité d'eau (% en poids de composition réceptrice) présente dans la composition réceptrice C-R est passée de 0,5% (état initial) à 2,1% (état final) après traitement.

Après un tel traitement humide et thermique, on constate que les compositions barrière C-2 et C-3 d'une part, C-5 et C-6 d'autre part, utilisables comme gomme d'enrobage dans les renforts filaires de l'invention, présentent une propriété de barrière à l'eau qui est très nettement améliorée par rapport aux compositions témoins C-1 et C-4 dépourvues de charge lamellaire. En particulier, avec les compositions barrière C-3 et C-6 comportant le taux le plus élevé de charge lamellaire, ceci quelle que soit la durée du traitement, l'augmentation de la quantité d'eau (parasite) recueillie dans la composition C-R après traitement thermique et humide, est 40% à 50% plus faible comparativement aux compositions témoin, respectivement C-1 et C-4.

En conclusion, la gomme d'enrobage utilisée dans le renfort filaire composite de l'invention possède des propriétés de barrière à eau nettement augmentées, conférant par exemple à la ceinture d'un pneumatique une protection qui est nettement améliorée contre les risques de pénétration d'eau à travers la bande de roulement.

**Tableau 1**

| Formulation : | C-1 | C-2 | C-3 | C-4 | C-5 | C-6 |
|---|---|---|---|---|---|---|
| Caoutchouc naturel (1) | 100 | 100 | 100 | 60 | 60 | 60 |
| SBR (2) | - | - | - | 40 | 40 | 40 |
| Noir de carbone (3) | 70 | 70 | 70 | 70 | 70 | 70 |
| Graphite (4) | - | 30 | 60 | - | 30 | 60 |
| Antioxydant (5) | 2 | 2 | 2 | 2 | 2 | 2 |
| Oxyde de zinc | 7 | 7 | 7 | 2 | 2 | 2 |
| Acide stéarique | 0.6 | 0.6 | 0.6 | 0.6 | 0.6 | 0.6 |
| Soufre | 5 | 5 | 5 | 5 | 5 | 5 |
| Accélérateur (6) | 0.6 | 0.6 | 0.6 | 0.6 | 0.6 | 0.6 |

| | | | | | | |
|---|---|---|---|---|---|---|
| (1) Caoutchouc naturel (peptisé) ; (2) SBR solution comportant 41% de motifs styrène et 59% de motifs butadiène ; avec, pour la partie butadiénique, 24% de motifs 1-2, 50% de motifs 1-4 trans et 26% de motifs 1-4 cis (Tg = -28°C) ; (3) grade ASTM N375 (société Cabot) ; (4) particules de graphite (Timrex^{®} 80X150 mesh - société Timcal) ; (5) N-1,3-diméthylbutyl-N-phénylparaphénylènediamine (Santoflex 6-PPD de la société Flexsys); (6) N-dicyclohexyl-2-benzothiazol-sulfénamide ("Santocure TBBS" de la société Flexsys). | | | | | | |

**Tableau 2**

| Prise d'eau (% en poids) de la composition réceptrice (C-R) | Témoin (barrière C-1) | Invention (barrière C-2) | Invention (barrière C-3) |
|---|---|---|---|
| après traitement de 5 jours | 0.95 | 0.75 | 0.55 |
| après traitement de 10 jours | 1.45 | 1.10 | 0.9 |
| après traitement de 14 jours | 1.60 | 1.30 | 1.0 |

**Tableau 3**

| Prise d'eau (% en poids) de la composition réceptrice (C-R) | Témoin (barrière C-4) | Invention (barrière C-5) | Invention (barrière C-6) |
|---|---|---|---|
| après traitement de 5 jours | 1.00 | 0.75 | 0.50 |
| après traitement de 10 jours | 1.40 | 1.10 | 0.80 |
| après traitement de 14 jours | 1.55 | 1.30 | 0.90 |

## Revendications

1. Renfort filaire composite enrobé de caoutchouc, utilisable notamment pour le renforcement d'un article fini en caoutchouc tel qu'un pneumatique, comportant un ou plusieurs fil(s) de renforcement, textile(s) ou métallique(s), et une composition de caoutchouc dite gomme d'enrobage enrobant chaque fil, cette gomme d'enrobage comportant au moins un élastomère diénique, une charge renforçante, entre 10 et 150 pce d'une charge lamellaire et un système de réticulation.

2. Renfort selon la revendication 1, dans lequel l'élastomère diénique de la gomme d'enrobage est choisi dans le groupe constitué par le caoutchouc naturel, les polyisoprènes de synthèse, les polybutadiènes, les copolymères de butadiène, les copolymères d'isoprène et les mélanges de ces élastomères.

3. Renfort selon la revendication 2, dans lequel la gomme d'enrobage comporte 50 à 100 pce de caoutchouc naturel ou d'un polyisoprène de synthèse.

4. Renfort selon la revendication 2, dans lequel la composition d'enrobage comporte 50 à 100 pce d'un copolymère à base de styrène et de butadiène.

5. Renfort selon la revendication 4, dans lequel le copolymère est un copolymère styrène-butadiène présentant une température de transition vitreuse qui est supérieure à -40°C.

6. Renfort selon la revendication 5, dans lequel la température de transition vitreuse du copolymère à base de styrène et de butadiène est comprise entre -30°C et +30°C.

7. Renfort selon l'une quelconque des revendications 1 à 6, dans lequel le taux de charge renforçante dans la gomme d'enrobage est compris entre 20 et 100 pce, de préférence dans un domaine de 30 à 90 pce.

8. Renfort selon l'une quelconque des revendications 1 à 7, dans lequel la charge renforçante de la gomme d'enrobage comporte de la silice ou du noir de carbone ou un mélange de silice et de noir de carbone.

9. Renfort selon l'une quelconque des revendications 1 à 8, dans lequel le taux de charge lamellaire dans la gomme d'enrobage est compris entre 20 et 100 pce.

10. Renfort selon la revendication 9, dans lequel le taux de charge lamellaire dans la gomme d'enrobage est compris dans un domaine de 25 à 80 pce.

11. Renfort selon l'une quelconque des revendications 1 à 10, dans lequel la charge lamellaire de la gomme d'enrobage est choisie dans le groupe constitué par les graphites, les talcs, les micas et les mélanges de telles charges.

12. Renfort selon la revendication 11, dans lequel la charge lamellaire comporte des particules de graphite.

13. Renfort selon l'une quelconque des revendications 1 à 12, dans lequel la gomme d'enrobage comporte une résine plastifiante hydrocarbonée.

14. Article fini ou produit semi-fini en caoutchouc comportant un renfort filaire composite selon l'une quelconque des revendications 1 à 13.

15. Bandage pneumatique comportant un renfort filaire composite selon l'une quelconque des revendications 1 à 13.

## Patentansprüche

1. Kautschukumhüllte beschichtete fadenförmige Verbundverstärkung, die insbesondere zur Verstärkung eines Fertigartikels aus Kautschuk wie eines Reifens verwendet werden kann, umfassend einen oder mehrere textile oder metallische Verstärkungsfäden und eine jeden Faden umhüllende Kautschukzusammensetzung, die als Umhüllungsgummi bezeichnet wird, wobei dieser Umhüllungsgummi mindestens ein Dienelastomer, einen verstärkenden Füllstoff, zwischen 10 und 150 phe eines plättchenförmigen Füllstoffs und ein Vernetzungssystem umfasst.

2. Verstärkung nach Anspruch 1, wobei das Dienelastomer des Umhüllungsgummis aus der Gruppe bestehend aus Naturkautschuk, synthetischen Polyisoprenen, Polybutadienen, Butadien-Copolymeren, Isopren-Copolymeren und Mischungen dieser Elastomere ausgewählt ist.

3. Verstärkung nach Anspruch 2, wobei der Umhüllungsgummi 50 bis 100 phe Naturkautschuk oder synthetisches Polyisopren umfasst.

4. Verstärkung nach Anspruch 2, wobei der Umhüllungsgummi 50 bis 100 phe eines Copolymers auf Basis von Styrol und Butadien umfasst.

5. Verstärkung nach Anspruch 4, wobei es sich bei dem Copolymer um ein Styrol-Butadien-Copolymer mit einer Glasübergangstemperatur von mehr als -40°C handelt.

6. Verstärkung nach Anspruch 5, wobei die Glasübergangstemperatur des Copolymers auf Basis von Styrol und Butadien zwischen -30°C und +30°C liegt.

7. Verstärkung nach einem der Ansprüche 1 bis 6, wobei der Gehalt an verstärkendem Füllstoff in dem Umhüllungsgummi zwischen 20 und 100 phe, vorzugsweise in einem Bereich von 30 bis 90 phe, liegt.

8. Verstärkung nach einem der Ansprüche 1 bis 7, wobei der verstärkende Füllstoff des Umhüllungsgummis Kieselsäure oder Ruß oder eine Mischung von Kieselsäure und Ruß umfasst.

9. Verstärkung nach einem der Ansprüche 1 bis 8, wobei der Gehalt an plättchenförmigem Füllstoff in dem Umhüllungsgummi zwischen 20 und 100 phe liegt.

10. Verstärkung nach Anspruch 9, wobei der Gehalt an plättchenförmigem Füllstoff in dem Umhüllungsgummi in einem Bereich von 25 bis 80 phe liegt.

11. Verstärkung nach einem der Ansprüche 1 bis 10, wobei der plättchenförmige Füllstoff des Umhüllungsgummis aus der Gruppe bestehend aus Graphiten, Talken, Glimmern und Mischungen dieser Füllstoffe ausgewählt ist.

12. Verstärkung nach Anspruch 11, wobei der plättchenförmige Füllstoff Graphitteilchen umfasst.

13. Verstärkung nach einem der Ansprüche 1 bis 12, wobei der Umhüllungsgummi ein Kohlenwasserstoff-Weichmacherharz umfasst.

14. Fertigartikel oder Halbzeug aus Kautschuk, umfassend eine fadenförmige Verbundverstärkung nach einem der Ansprüche 1 bis 13.

15. Luftreifen, umfassend eine fadenförmige Verbundverstärkung nach einem der Ansprüche 1 bis 13.

## Claims

1. Composite thread-based reinforcement coated with rubber, which may be used notably for reinforcing a finished rubber article such as a tyre, comprising one or more textile or metallic reinforcing threads, and a rubber composition named coating rubber coating each thread, this coating rubber comprising at least a diene elastomer, a reinforcing filler, between 10 and 150 phr of a platy filler, and a crosslinking system.

2. Reinforcement according to Claim 1, in which the diene elastomer of the coating rubber is chosen from the group consisting of natural rubber, synthetic polyisoprenes, polybutadienes, butadiene copolymers and isoprene copolymers, and blends of these elastomers.

3. Reinforcement according to Claim 2, in which the coating rubber comprises 50 to 100 phr of natural rubber or of a synthetic polyisoprene.

4. Reinforcement according to Claim 2, in which the coating composition comprises 50 to 100 phr of a copolymer based on styrene and butadiene.

5. Reinforcement according to Claim 4, in which the copolymer is a styrenebutadiene copolymer with a glass transition temperature of greater than -40°C.

6. Reinforcement according to Claim 5, in which the glass transition temperature of the copolymer based on styrene and butadiene is between -30°C and +30°C.

7. Reinforcement according to any one of Claims 1 to 6, in which the content of reinforcing filler in the coating rubber is between 20 and 100 phr, preferably within a range from 30 to 90 phr.

8. Reinforcement according to any one of Claims 1 to 7, in which the reinforcing filler of the coating rubber comprises silica or carbon black or a mixture of silica and carbon black.

9. Reinforcement according to any one of Claims 1 to 8, in which the content of platy filler in the coating rubber is between 20 and 100 phr.

10. Reinforcement according to Claim 9, in which the content of platy filler in the coating rubber is within a range from 25 to 80 phr.

11. Reinforcement according to any one of Claims 1 to 10, in which the platy filler of the coating rubber is chosen from the group consisting of graphites, talcs and micas, and mixtures of such fillers.

12. Reinforcement according to Claim 11, in which the platy filler comprises graphite particles.

13. Reinforcement according to any one of Claims 1 to 12, in which the coating rubber comprises a hydrocarbon-based plasticizing resin.

14. Finished article or semi-finished product made of rubber, comprising a composite thread-based reinforcement according to any one of Claims 1 to 13.

15. Pneumatic tyre outer comprising a composite thread-based reinforcement according to any one of Claims 1 to 13.
